(19) **Europäisches Patentamt**
**European Patent Office**
**Office européen des brevets**

(11) **EP 2 344 728 B1**

(12) **FASCICULE DE BREVET EUROPEEN**

(45) Date de publication et mention de la délivrance du brevet:
**10.02.2016 Bulletin 2016/06**

(21) Numéro de dépôt: **09756001.5**

(22) Date de dépôt: **09.10.2009**

(51) Int Cl.:
*F01D 21/00* *(2006.01)*      *G01H 1/00* *(2006.01)*

(86) Numéro de dépôt international:
**PCT/FR2009/051930**

(87) Numéro de publication internationale:
**WO 2010/040966 (15.04.2010 Gazette 2010/15)**

(54) **PROCEDE DE SURVEILLANCE D'UN TURBOREACTEUR**

VERFAHREN ZUR ÜBERWACHUNG EINES TURBINENSTRAHLTRIEBWERKS

METHOD FOR MONITORING A TURBOJET ENGINE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **10.10.2008 FR 0856855**

(43) Date de publication de la demande:
**20.07.2011 Bulletin 2011/29**

(73) Titulaire: **Snecma**
**75015 Paris (FR)**

(72) Inventeurs:
• **GEREZ, Valerio**
**F-91330 Yerres (FR)**
• **GRIFFATON, Julien**
**F-75011 Paris (FR)**
• **GUILLEMAND, Grégory**
**F-77550 Moissy Cramayel (FR)**

(74) Mandataire: **Boura, Olivier et al**
**Cabinet Beau de Loménie**
**158, rue de l'Université**
**75340 Paris Cedex 07 (FR)**

(56) Documents cités:
**WO-A-01/75272           WO-A-97/43729**
**US-A- 4 437 163          US-A- 4 453 407**
**US-A1- 2005 199 064      US-A1- 2007 250 245**
**US-B2- 6 768 938**

**Description**

Arrière-plan de l'invention

La présente invention se rapporte au domaine général de la surveillance d'un turboréacteur. Elle vise plus précisément un procédé permettant de détecter de façon automatique l'ingestion d'un objet par un turboréacteur d'avion au cours d'un vol.

Au cours d'un vol, il est possible que des corps étrangers ou des pièces détachées du turboréacteur soient ingérés par le turboréacteur et entraînent des détériorations à l'intérieur de celui-ci. En particulier, l'impact d'un objet sur une aube de soufflante risque d'endommager celle-ci. Dans le cas de détériorations dues à l'ingestion de corps étrangers au turboréacteur (par exemple d'oiseaux), on parle de FOD (pour « Foreign Object Damage »). Dans le cas de détériorations dues à l'ingestion de pièces détachées du turboréacteur (par exemple des rivets, boulons, etc.), on parle plutôt de DOD (pour « Domestic Object Damage »).

Différentes solutions connues existent pour détecter la présence de FOD ou de DOD. L'une de ces solutions se base sur une mesure des vibrations de l'un des rotors du turboréacteur pour détecter l'apparition d'un balourd consécutif à l'endommagement de celui-ci par ingestion d'un objet. En cas de détection d'un balourd, une inspection visuelle au sol du turboréacteur (par endoscopie par exemple) est réalisée : la présence de traces de choc, de plumes d'oiseau ou de poches sur les aubes à l'endroit de l'impact permet alors de diagnostiquer la présence de FOD ou de DOD.

Une telle solution présente cependant de nombreux inconvénients. Elle est notamment incapable de détecter la présence de FOD ou de DOD qui ne conduisent à aucun balourd sur les rotors du turboréacteur (ou à un balourd trop faible pour être détecté). Par ailleurs, l'inspection visuelle du turboréacteur nécessite une intervention au sol qui doit être programmée à l'avance et qui peut être fastidieuse.

Une autre solution connue consiste à utiliser des instruments de mesure embarqués dans l'avion (comme les radars) pour détecter la présence de FOD ou de DOD. Cette solution présente toutefois l'inconvénient de nécessiter une instrumentation supplémentaire qui, au regard du gain escompté, est coûteuse et alourdit la masse de l'avion.

On connaît également du document US 2007/0250245 un procédé de surveillance d'un turboréacteur permettant de détecter quasiment instantanément si un corps étranger a endommagé le turboréacteur. A cet effet, ce procédé prévoit de comparer en temps réel le niveau vibratoire d'un rotor du turboréacteur à un seuil prédéfini. En cas de dépassement de ce seuil sur une durée prédéterminée, une alerte de maintenance est émise.

Ce procédé présente cependant de nombreux désavantages. Il est notamment limité à la détection de FOD ou de DOD ayant entraîné au moins temporairement la déformation d'une aube de soufflante (le procédé ne traite que des données vibratoires réduites). Un simple choc provoqué par l'ingestion d'un corps sans déformation (temporaire ou définitive) d'une aube de soufflante ne sera donc pas détecté par ce procédé. Par ailleurs, pour qu'une alerte de maintenance soit émise, il est nécessaire que le dépassement de seuil se produise sur une durée minimale. Des risques existent donc que certains FOD ou DOD ne soient pas détectés par ce procédé. Enfin, le procédé ne prévoit pas la possibilité d'éviter les fausses alertes en éliminant les perturbations électroniques du signal.

On connaît encore du document US 6,907,368 un procédé de détection de l'ingestion de pièces détachées (DOD) par une analyse de transformées de Fourier d'un signal représentatif du bruit du turboréacteur en fonctionnement. Bien qu'efficace pour détecter la présence de DOD, ce procédé présente l'inconvénient ne pas pouvoir éviter les fausses alertes provoquées par des perturbations qui n'ont pas pour origine l'ingestion de pièces détachées.

Objet et résumé de l'invention

La présente invention a donc pour but principal de pallier de tels inconvénients en proposant de détecter de façon automatique et certaine les FOD et les DOD, mêmes si ces derniers n'ont pas entraîné l'apparition de balourd sur l'un des rotors du turboréacteur ou une déformation d'une aube de soufflante.

Ce but est atteint grâce à un procédé de surveillance d'un turboréacteur conformément à la revendication 1, consistant à :

acquérir un signal représentatif d'un niveau vibratoire d'un rotor en fonctionnement du turboréacteur ;
acquérir un régime de rotation du rotor en fonctionnement ;
comparer l'amplitude du signal à au moins un seuil vibratoire prédéterminé en fonction du régime de rotation du rotor ; et
en cas de dépassement du seuil par un pic d'amplitude, analyser le signal sur une fenêtre temporelle définie autour du pic d'amplitude pour déterminer si le phénomène à l'origine du pic d'amplitude est un choc mécanique subi par le rotor du turboréacteur ou une perturbation électronique du signal.

Le procédé selon l'invention comporte une étape d'analyse du signal postérieurement à la détection du dépassement de seuil vibratoire par un pic d'amplitude. Cette étape a pour but de déterminer que le phénomène à l'origine du pic d'amplitude est bien un choc mécanique subi par le rotor du turboréacteur et non une simple perturbation électronique du signal. Toute fausse alerte peut ainsi être écartée.

Par ailleurs, le procédé selon l'invention permet de détecter un large type de phénomènes à l'origine du pic d'amplitude : il n'est ainsi pas nécessaire que l'objet ingéré par le turboréacteur ait engendré l'apparition d'un balourd ou qu'il ait entraîné une déformation (même temporaire) d'une aube de soufflante pour pouvoir être détecté.

De manière plus générale, le procédé selon l'invention permet l'émission d'un message de maintenance pour prescrire une inspection visuelle des dégâts réels engendrés par l'ingestion de l'objet par le turboréacteur (par exemple à la fin du vol) sans devoir attendre une inspection de maintenance programmée à l'avance. Ainsi, il est possible d'éviter la dégradation à long terme des performances du turboréacteur en réparant le plus rapidement possible les dégâts engendrés suite à l'ingestion de l'objet.

Enfin, le procédé selon l'invention peut être mis en oeuvre au moyen d'instruments de mesure (notamment d'accéléromètres) et de systèmes d'acquisition de données (notamment le calculateur électronique) qui sont déjà présents sur la plupart des avions ou sur les turboréacteurs eux-mêmes.

L'étape d'analyse du signal sur la fenêtre temporelle peut comprendre une analyse de la symétrie du signal. De façon alternative ou cumulative, l'étape d'analyse du signal sur la fenêtre temporelle peut également comprendre une modélisation de la décroissance du signal postérieurement au pic d'amplitude. Dans ce second cas, l'étape d'analyse du signal sur la fenêtre temporelle consiste à calculer un écart entre la courbe de la moyenne des amplitudes d'un spectrogramme du signal sur la fenêtre temporelle à chaque instant et sa modélisation par une exponentielle.

Le seuil vibratoire prédéterminé comprend avantageusement des valeurs hautes et basses du signal sur différentes plages de régime de rotation du rotor.

Selon une disposition avantageuse, le procédé consiste, en outre, suite à la détermination d'un choc mécanique subi par le rotor du turboréacteur, à déterminer si un balourd est apparu sur le rotor consécutivement à ce choc mécanique.

Dans ce cas, l'étape de détermination de l'apparition d'un balourd sur le rotor peut consister à réaliser un spectrogramme du signal sur la fenêtre temporelle, calculer la moyenne des amplitudes du spectrogramme à chaque instant, calculer la différence de niveau de la moyenne antérieurement et postérieurement au pic d'amplitude, et comparer la différence de niveau à un seuil de niveau prédéterminé.

De préférence, les étapes d'acquisition du signal et du régime de rotation du rotor sont réalisées en continu au cours d'un cycle de fonctionnement du turboréacteur.

De préférence également, les étapes d'acquisition du signal et du régime de rotation du rotor et l'étape de comparaison de l'amplitude du signal sont réalisées en temps réel, l'étape d'analyse du signal étant réalisée en différé.

De préférence encore, un message de maintenance est émis s'il a été déterminé que le phénomène à l'origine du pic d'amplitude est un choc mécanique subi par le rotor du turboréacteur. Ce message de maintenance peut être transmis au cours du vol aux équipes de maintenance de la destination de l'avion. Ainsi, l'inspection visuelle consécutive à la détection du choc mécanique peut être préparée à l'avance de sorte que la durée d'immobilisation au sol de l'avion nécessaire à cette inspection peut être optimisée.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente, sous forme d'organigramme, les principales étapes du procédé selon l'invention ; et
- les figures 2, 3, 4A, 4B, 5A, 5B, 6A, 6B, 7 et 8 illustrent un exemple de mise en oeuvre du procédé selon l'invention.

Description détaillée d'un mode de réalisation

Le procédé de surveillance selon l'invention permet de détecter de façon automatique l'ingestion par un turboréacteur d'avion d'un objet (corps étranger ou pièce détachée du turboréacteur) au cours d'un vol.

Le procédé repose sur une analyse de signaux temporels bruts provenant de capteurs de vibrations (de type accéléromètres) typiquement installés sur un turboréacteur pour assurer les fonctions de surveillance vibratoire traditionnelles.

De façon connue en soi, ces capteurs de vibration permettent de mesurer les niveaux vibratoires émis par l'un des rotors du turboréacteur lors du fonctionnement de celui-ci. Ils sont reliés pour le traitement du signal à un calculateur électronique (également appelé EMU pour « Engine Monitoring Unit ») pouvant être présent dans l'avion (par exemple dans la soute) ou équipant directement le turboréacteur.

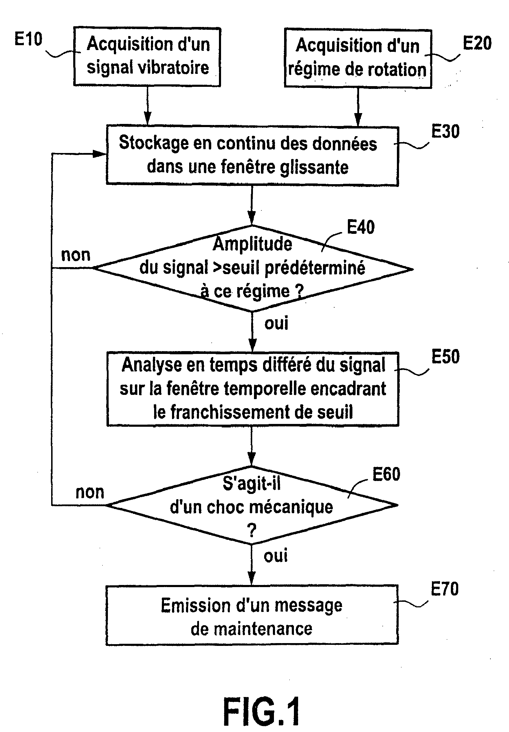

En liaison avec la figure 1, le procédé de surveillance selon l'invention consiste d'abord à acquérir en temps réel au cours du vol le signal provenant des capteurs de vibrations (étape E10), ainsi que le régime de rotation du rotor (étape E20).

Par acquisition « en temps réel du signal provenant des capteurs de vibration », on entend que les signaux reçus par les capteurs sont immédiatement transmis au calculateur électronique du turboréacteur au cours du vol pour traitement, un léger décalage temporel pouvant cependant subsister entre le moment où les vibrations sont émises et le moment où ces signaux sont convertis par le calculateur électronique pour être traités.

Quant à l'acquisition du régime de rotation du rotor au cours du vol (étape E20), elle consiste par exemple à convertir le signal d'une sonde tachymétrique montée sur le rotor (une telle sonde pouvant déjà être présente sur le turboréacteur). En particulier, cette acquisition peut être réalisée à une fréquence d'échantillonnage beaucoup plus faible que celle du signal provenant des capteurs de vibration.

Les données ainsi acquises (signal provenant des capteurs de vibration et régime de rotation du rotor) sont alors temporairement stockées en continu au cours du vol (étape E30).

L'étape suivante (E40) consiste à comparer l'amplitude du signal provenant des capteurs de vibration à au moins un seuil vibratoire prédéterminé en fonction du régime de rotation du rotor. Cette étape est également réalisée en temps réel au cours du vol.

En cas de dépassement du seuil par un pic d'amplitude, il est prévu, au cours d'une étape E50, d'analyser le signal sur une fenêtre temporelle définie autour du pic d'amplitude.

Cette étape d'analyse E50 permet de déterminer que le phénomène à l'origine du pic d'amplitude est bien un choc mécanique subi par le rotor du turboréacteur et provenant de l'ingestion d'un objet et non une simple perturbation électronique du signal (E60).

Dans le cas d'un choc mécanique subi par le rotor, un message de maintenance peut être transmis (étape E70), par exemple à une équipe de maintenance au sol, pour requérir une inspection visuelle du turboréacteur afin d'évaluer les éventuels dommages subis par le turboréacteur. Dans le cas d'une simple perturbation électronique du signal, aucune action n'est entreprise et le procédé poursuit son cours.

Les étapes d'analyse du signal (E50), de détermination de l'origine du pic d'amplitude (E60) et d'émission d'un message de maintenance (E70) sont de préférence mises en oeuvre au niveau du calculateur électronique EMU qui dispose de moyens adéquats de traitement du signal. Elles pourraient toutefois être mises en oeuvre au niveau d'un ordinateur au sol. Dans ce cas, les données du signal seraient transmises à cet ordinateur, soit au cours de vol, soit à l'arrivée de l'avion.

L'étape E50 d'analyse du signal est par ailleurs réalisée en différé (par opposition à une analyse en temps réel). Elle est de préférence réalisée à n'importe quel moment au cours du vol avant l'atterrissage de l'avion et se déroule en parallèle à l'acquisition du signal et du régime de rotation du rotor et à la comparaison du signal au seuil vibratoire prédéterminé.

On décrira maintenant un exemple de mise en oeuvre de certaines étapes du procédé de surveillance selon l'invention.

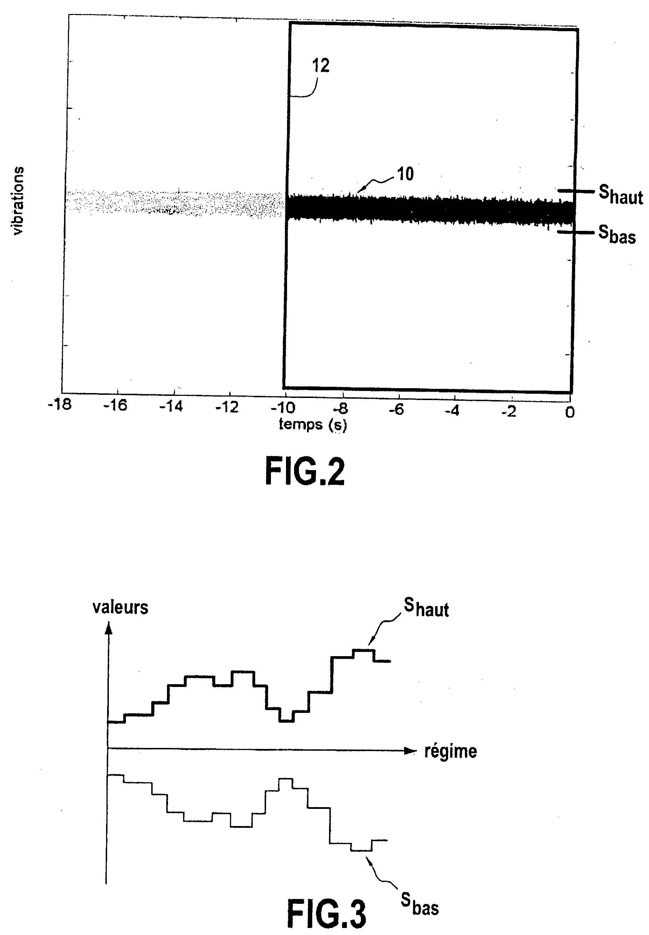

La figure 2 représente ainsi un exemple de signal temporel 10 représentatif d'un niveau vibratoire d'un rotor en fonctionnement du turboréacteur et provenant d'un capteur de vibrations. Cette figure 2 représente le signal après conversion par le calculateur électronique EMU.

Le signal 10 est enregistré en continu pendant le vol sur une fenêtre temporelle glissante 12 dont la durée est par exemple de l'ordre de 10 secondes environ. De façon connue en soi, une fenêtre temporelle glissante a pour fonction de « traquer » le signal et de l'enregistrer en continu sur une période fixe au fur et à mesure de l'acquisition du signal. Cette fenêtre glissante est stockée dans une mémoire équipant le calculateur électronique EMU.

Sur la figure 2 sont également représentés deux traits représentatifs d'une valeur haute $S_{haut}$ et d'une valeur basse $S_{bas}$ du signal pour un régime particulier de rotation du rotor.

Ces valeurs définissent des seuils prédéterminés du signal qui correspondent à un fonctionnement « normal » du turboréacteur, c'est-à-dire à un fonctionnement d'un turboréacteur n'ayant pas subi d'ingestion d'objets. Elles sont évaluées à partir de données vibratoires récupérées sur un ou plusieurs turboréacteurs appartenant à une même ou à plusieurs familles différentes et sont obtenues pendant des essais réalisés au sol ou en vol. De préférence, ces valeurs sont réalisées à partir de données enregistrées en vol pour une même famille de turboréacteurs.

Comme représenté sur la figure 3, les valeurs maximales $S_{haut}$ et minimales $S_{bas}$ définissant les seuils sont fonction du régime de rotation du rotor du turboréacteur. Sur cette figure, ces valeurs sont définies sur différentes courtes plages de régime de rotation du rotor.

Au cours de l'étape E40 du procédé (figure 1), l'amplitude du signal enregistré sur la fenêtre temporelle glissante est comparée en continu (c'est-à-dire sans interruption) aux valeurs hautes et basses définissant les seuils prédéterminés du signal pour le régime de rotation du rotor considéré.

Cette étape de comparaison qui est réalisée au niveau du calculateur électronique EMU permet de détecter un éventuel dépassement des seuils prédéterminés par un pic d'amplitude du signal. Dans le cas de la figure 3, un pic d'amplitude du signal dépassant $S_{haut}$ (dans les valeurs positives) ou $S_{bas}$ (dans les valeurs négatives) doit être immé-

# EP 2 344 728 B1

diatement détecté.

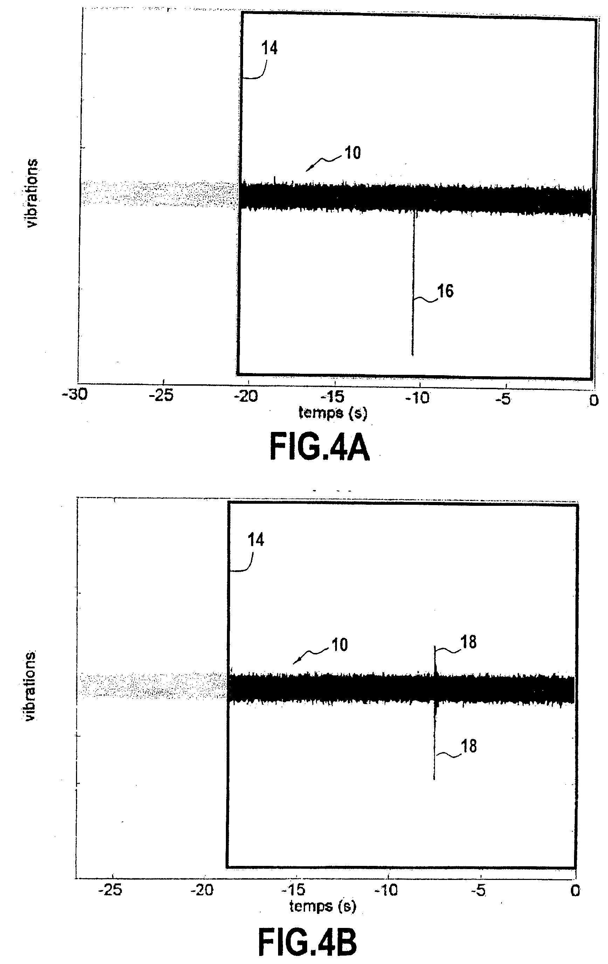

En cas de franchissement d'un seuil par un pic d'amplitude, le calculateur électronique EMU commande un stockage à la fois de la fenêtre temporelle qui précède le franchissement de seuil et de celle qui suit immédiatement ce franchissement de seuil. Ainsi, comme représenté sur les figures 4A et 4B, une fenêtre temporelle 14 centrée sur le pic d'amplitude (respectivement 16 et 18) est mémorisée (la durée de cette fenêtre est par exemple de l'ordre de 20 secondes).

Les figures 4A et 4B représentent deux types différents de dépassement de seuil: le pic d'amplitude 16 de la figure 4A est représentatif d'une perturbation électronique du signal (par exemple due à une interférence avec d'autres composants électroniques), tandis que les pics d'amplitude 18 de la figure 4B sont représentatifs d'une ingestion par le turboréacteur d'un objet (corps étranger ou pièce détachée du turboréacteur).

L'étape d'analyse décrite ci-après permet de différencier ces deux types d'évènements.

Deux méthodes peuvent être utilisées (alternativement ou l'une après l'autre) pour distinguer un choc mécanique subi par le rotor d'une simple perturbation électronique du signal (on parle également dans ce cas d'un « outlier » pour observation aberrante). Ces méthodes sont réalisées à l'aide des moyens de calcul du calculateur électronique EMU.

L'une de ces méthodes consiste à étudier de façon automatique la symétrie du pic d'amplitude par rapport à l'axe de symétrie du signal observé. Différents essais ont en effet permis de constater qu'un choc mécanique subi par le rotor du turboréacteur engendre généralement un pic d'amplitude sensiblement symétrique, tandis qu'une perturbation électronique du signal ne l'est pas nécessairement.

L'étude de la symétrie du pic d'amplitude peut par exemple consister à vérifier si la condition suivante est remplie :

$$S = \frac{Min(|M|,|m|)}{Max(|M|,|m|)} \geq c$$

où « M » est la valeur maximale positive prise par le pic d'amplitude, « m » est la valeur minimale négative du pic d'amplitude et « c » est un paramètre prédéterminé par le motoriste.

Si la condition ci-dessus est remplie, il est considéré que le franchissement de seuil par le pic d'amplitude n'est probablement pas dû à une perturbation électronique du signal.

Bien entendu, on pourrait imaginer d'autres conditions à évaluer permettant de déterminer automatiquement si le pic d'amplitude est symétrique ou non.

L'autre méthode permettant de distinguer un choc mécanique subi par le rotor d'une simple perturbation électronique du signal consiste à déterminer si le signal présente un amortissement à la suite du pic d'amplitude. En effet, le signal représentatif d'un choc mécanique subi par le rotor présente toujours un amortissement après le pic d'amplitude, tandis qu'une perturbation électronique du signal n'en a pas.

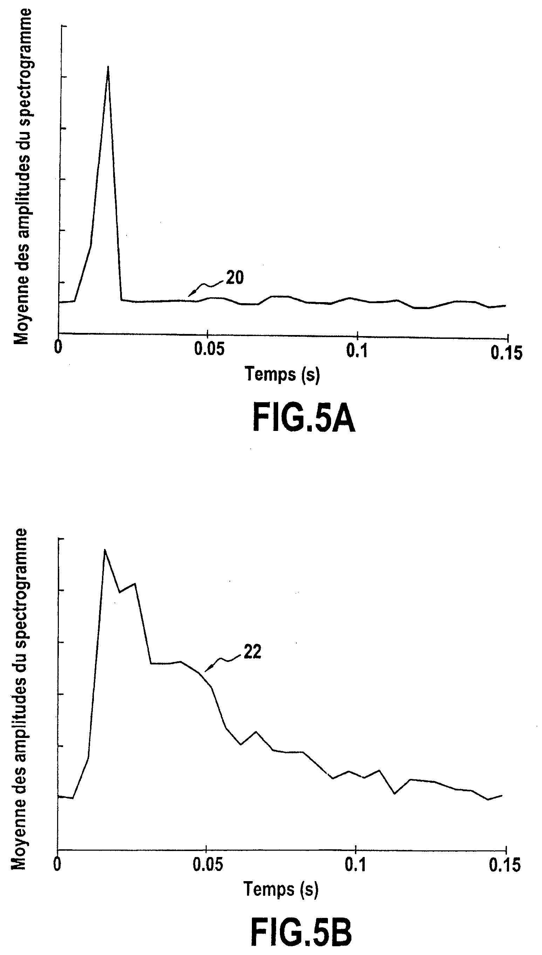

A cet effet, une modélisation de la décroissance du signal postérieurement au pic d'amplitude est évaluée à partir d'un spectrogramme du signal enregistré sur la fenêtre temporelle (non représenté sur les figures). La moyenne à chaque instant des amplitudes de ce spectrogramme est ensuite calculée, ce qui permet d'obtenir les courbes 20, 22 représentées sur les figures 5A et 5B, respectivement pour la perturbation électronique du signal et pour le choc mécanique subi par le rotor.

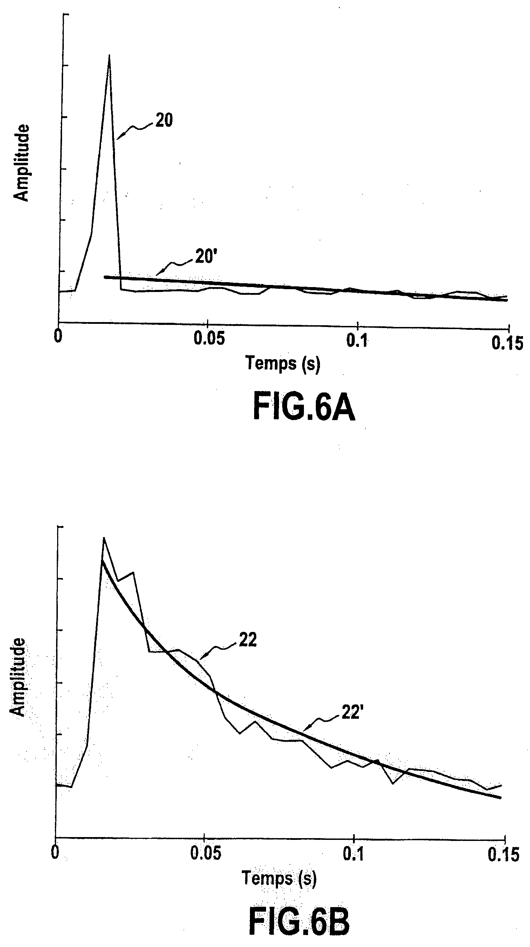

On analyse ensuite la similitude de la courbe X (X représentant la courbe 20 ou 22) avec une fonction de type exponentielle représentative d'un choc amorti. A cet effet, en supposant que la courbe 20, 22 peut être approximée par une fonction exponentielle décroissante de la forme $Y = A.e^{-t/\tau}$, on cherche les coefficients « a » et « b » tels que la droite $\ln(Y) = \ln(A) + (-1/\tau) \times t = a + b \times t$ représente une bonne approximation linéaire, par exemple au sens des moindres carrés, de la courbe ln(X). Sur les figures 6A et 6B, les droites 20', 22' correspondent ainsi à l'approximation linéaire au sens des moindres carrés des courbes ln(X), respectivement pour la perturbation électronique du signal et pour le choc mécanique subi par le rotor.

Lors du calcul de l'approximation linéaire par la méthode des moindres carrés, le coefficient de détermination de la droite de régression est une mesure de similitude de la courbe X avec une courbe exponentielle : un seuil minimal sur le coefficient de détermination permet alors de décider si la courbe X est suffisamment proche d'une exponentielle, c'est-à-dire si le signal est suffisamment représentatif d'un choc mécanique.

Selon une disposition avantageuse de l'invention, le procédé consiste en outre, suite à la détermination que le rotor du turboréacteur a subi un choc mécanique, à déterminer si un balourd est apparu sur le rotor consécutivement à ce choc. Un tel balourd peut être dû à une perte partielle ou totale d'une ou de plusieurs aubes ayant été touchées par l'objet ingéré. Il peut également s'agir du pochage de ces mêmes aubes.

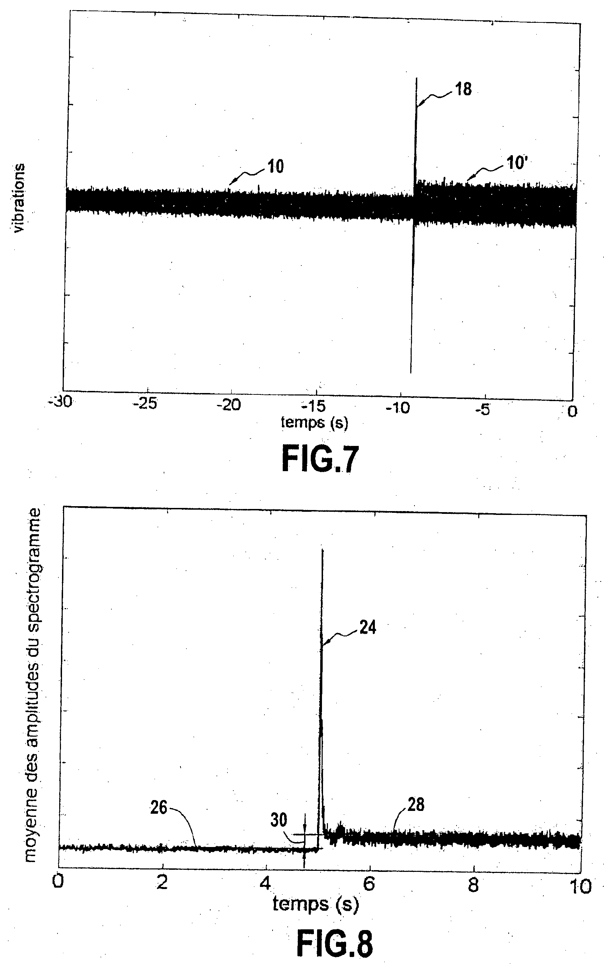

La figure 7 représente un signal temporel 10 caractéristique de l'apparition d'un balourd sur le rotor du turboréacteur consécutivement à un choc mécanique. Sur cette figure, il peut être constaté que la forme du signal 10' postérieur

5

au pic d'amplitude 18 consécutif au choc mécanique subi par le rotor est différente de celle du signal 10 antérieur au pic d'amplitude.

A titre d'exemple, une méthode pour déterminer de façon automatique si un balourd est apparu consiste à réaliser un spectrogramme du signal vibratoire sur la fenêtre temporelle centrée sur le pic d'amplitude 18. La moyenne à chaque instant des amplitudes de ce spectrogramme est ensuite calculée, ce qui permet d'obtenir la courbe 24 représentée sur la figure 8.

La moyenne de l'amplitude des points de la courbe 24 (également appelé niveau de la moyenne) est alors calculée postérieurement et antérieurement au pic d'amplitude 18. Ces moyennes donnent deux traits 26 et 28 représentés sur la figure 8, respectivement pour la portion de courbe antérieure au pic d'amplitude et pour la portion de courbe postérieure à ce pic.

La différence 30 entre ces deux niveaux est calculée et comparée à un seuil de niveau prédéterminé. Si la différence dépasse le seuil de niveau, il peut en être déduit qu'un balourd s'est installé sur le rotor du turboréacteur consécutivement au choc mécanique et cette information peut être ajoutée au message de maintenance émis pour avertir de la présence d'un FOD ou d'un DOD.

Comme pour le seuil vibratoire, le seuil de niveau utilisé pour déterminer si un balourd est apparu est évalué à partir de données vibratoires récupérées sur un ou plusieurs turboréacteurs appartenant à une même ou à plusieurs familles différentes et sont obtenues pendant des essais réalisés au sol ou en vol.

**Revendications**

1. Procédé de surveillance d'un turboréacteur, consistant à :

   acquérir (E10) un signal représentatif d'un niveau vibratoire d'un rotor en fonctionnement du turboréacteur ;
   acquérir (E20) un régime de rotation du rotor en fonctionnement ; **caractérisé en ce qu'**il consiste également à :

   comparer (E40) l'amplitude du signal à au moins un seuil vibratoire prédéterminé en fonction du régime de rotation du rotor ; et
   en cas de dépassement du seuil par un pic d'amplitude, analyser (E50) le signal sur une fenêtre temporelle définie autour du pic d'amplitude pour déterminer (E60) si le phénomène à l'origine du pic d'amplitude est un choc mécanique subi par le rotor du turboréacteur ou une perturbation électronique du signal.

2. Procédé selon la revendication 1, dans lequel l'étape d'analyse du signal sur la fenêtre temporelle comprend une analyse de la symétrie du signal.

3. Procédé selon l'une des revendications 1 et 2, dans lequel l'étape d'analyse du signal sur la fenêtre temporelle comprend une modélisation de la décroissance du signal postérieurement au pic d'amplitude.

4. Procédé selon la revendication 3, dans lequel l'étape d'analyse du signal sur la fenêtre temporelle consiste à calculer un écart entre la courbe de la moyenne des amplitudes d'un spectrogramme du signal sur la fenêtre temporelle à chaque instant et sa modélisation par une exponentielle.

5. Procédé selon l'une quelconque des revendications 1 à 4, dans lequel le seuil vibratoire prédéterminé comprend des valeurs hautes et basses du signal sur différentes plages de régime de rotation du rotor.

6. Procédé selon l'une quelconque des revendications 1 à 5, consistant en outre, suite à la détermination d'un choc mécanique subi par le rotor du turboréacteur, à déterminer si un balourd est apparu sur le rotor consécutivement à ce choc mécanique.

7. Procédé selon la revendication 6, dans lequel l'étape de détermination de l'apparition d'un balourd sur le rotor consiste à :

   réaliser un spectrogramme du signal sur la fenêtre temporelle
   calculer la moyenne des amplitudes du spectrogramme à chaque instant ;
   calculer la différence de niveau de la moyenne antérieurement et postérieurement au pic d'amplitude ; et
   comparer la différence de niveau à un seuil de niveau prédéterminé.

8. Procédé selon l'une quelconque des revendications 1 à 7, dans lequel les étapes (E10, E20) d'acquisition du signal et du régime de rotation du rotor sont réalisées en continu au cours d'un cycle de fonctionnement du turboréacteur.

9. Procédé selon l'une quelconque des revendications 1 à 8, dans lequel les étapes (E10, E20) d'acquisition du signal et du régime de rotation du rotor et l'étape (E40) de comparaison de l'amplitude du signal sont réalisées en temps réel, l'étape (E50) d'analyse du signal étant réalisée en différé.

10. Procédé selon l'une quelconque des revendications 1 à 9, dans lequel un message de maintenance est émis (E70) s'il a été déterminé que le phénomène à l'origine de l'évènement vibratoire est un choc mécanique subi par le rotor du turboréacteur.

**Patentansprüche**

1. Verfahren zur Überwachung eines Turbostrahltriebwerks, das darin besteht:

   ein Signal, welches für einen Schwingungspegel eines Rotors im Betrieb des Turbostrahltriebwerks repräsentativ ist, zu erfassen (E10),
   eine Drehzahl des Rotors im Betrieb zu erfassen (E20),

   **dadurch gekennzeichnet, dass** es auch darin besteht:

   die Amplitude des Signals mit wenigstens einer in Abhängigkeit von der Drehzahl des Rotors vorbestimmten Schwingungsschwelle zu vergleichen (E40), und,
   im Falle eines Überschreitens der Schwelle durch einen Amplitudenspitzenwert, das Signal über ein um den Amplitudenspitzenwert definiertes Zeitfenster zu analysieren (E50), um zu bestimmen (E60), ob das dem Amplitudenspitzenwert zugrundeliegende Phänomen ein mechanischer Stoß, den der Rotor des Turbostrahltriebwerks erfahren hat, oder eine elektronische Störung des Signals ist.

2. Verfahren nach Anspruch 1, wobei der Schritt des Analysierens des Signals über das Zeitfenster eine Analyse der Symmetrie des Signals umfasst.

3. Verfahren nach einem der Ansprüche 1 und 2, wobei der Schritt des Analysierens des Signals über das Zeitfenster eine Modellierung des Abfalls des Signals nach dem Amplitudenspitzenwert umfasst.

4. Verfahren nach Anspruch 3, wobei der Schritt des Analysierens des Signals über das Zeitfenster darin besteht, eine Abweichung zwischen der Kurve des Mittelwertes der Amplituden eines Spektrogramms des Signals über das Zeitfenster zu jedem Zeitpunkt und deren Modellierung durch eine Exponentialfunktion zu berechnen.

5. Verfahren nach einem der Ansprüche 1 bis 4, wobei die vorbestimmte Schwingungsschwelle hohe und niedrige Werte des Signals über verschiedene Drehzahlbereiche des Rotors umfasst.

6. Verfahren nach einem der Ansprüche 1 bis 5, das ferner darin besteht, im Anschluss an die Bestimmung eines mechanischen Stoßes, den der Rotor des Turbostrahltriebwerks erfahren hat, zu bestimmen, ob nach diesem mechanischen Stoß eine Unwucht an dem Rotor aufgetreten ist.

7. Verfahren nach Anspruch 6, wobei der Schritt der Bestimmung des Auftretens einer Unwucht an dem Rotor darin besteht:

   ein Spektrogramm des Signals über das Zeitfenster zu erstellen,
   den Mittelwert der Amplituden des Spektrogramms zu jedem Zeitpunkt zu berechnen,
   den Pegelunterschied des Mittelwertes vor und nach dem Amplitudenspitzenwert zu berechnen, und
   den Pegelunterschied mit einer vorbestimmten Pegelschwelle zu vergleichen.

8. Verfahren nach einem der Ansprüche 1 bis 7, wobei die Schritte (E10, E20) des Erfassens des Signals und der Drehzahl des Rotors im Laufe eines Betriebszyklus des Turbostrahltriebwerks fortlaufend durchgeführt werden.

9. Verfahren nach einem der Ansprüche 1 bis 8, wobei die Schritte (E10, E20) des Erfassens des Signals und der Drehzahl des Rotors und der Schritt (E40) des Vergleichens der Amplitude des Signals in Echtzeit durchgeführt werden, wobei der Schritt (E50) des Analysierens des Signals mit zeitlicher Verzögerung durchgeführt wird.

10. Verfahren nach einem der Ansprüche 1 bis 9, wobei eine Wartungsmeldung ausgegeben wird (E70), wenn bestimmt worden ist, dass das dem Schwingungsereignis zugrundeliegende Phänomen ein mechanischer Stoß, den der Rotor des Turbostrahltriebwerks erfahren hat, ist.

**Claims**

1. A method of monitoring a turbojet, the method consisting in:

   acquiring (E10) a signal representative of a vibratory level of a rotor during operation of the turbojet;
   acquiring (E20) a speed of rotation of the rotor in operation, **characterized in that** it also consists in :

   comparing (E40) the amplitude of the signal with at least one vibratory threshold that is predetermined as a function of the speed of rotation of the rotor; and
   in the event of the threshold being crossed by an amplitude peak, analyzing (E50) the signal over a defined time window on either side of the amplitude peak in order to determine (E60) whether the phenomenon giving rise to the amplitude peak is a mechanical impact against the turbojet rotor or an electronic disturbance of the signal.

2. A method according to claim 1, wherein the step of analyzing the signal over the time window comprises analyzing the symmetry of the signal.

3. A method according to claim 1 or claim 2, wherein the step of analyzing the signal over the time window comprises modeling the decrease in the signal after the amplitude peak.

4. A method according to claim 3, wherein the step of analyzing the signal over the time window consists in calculating a difference between the curve plotting the averages of the amplitudes of a spectrogram of the signal at each instant over the time window, with an exponential model of that curve.

5. A method according to any one of daims 1 to 4, wherein the predetermined vibration threshold comprises high and low values for the signal over different ranges of rotor rotation speed.

6. A method according to any one of daims 1 to 5, further consisting, after determining that there bas been a mechanical impact against the rotor of the turbojet, in determining whether an unbalance has appeared in the rotor following the mechanical impact.

7. A method according to claim 6, wherein the step of determining that an unbalance has appeared in the rotor consists in:

   making a spectrogram of the signal over the time window;
   calculating the average of the amplitudes of the spectrogram at each instant;
   calculating the difference in the levels of the average before and after the amplitude peak; and
   comparing the difference in level with a predetermined level threshold.

8. A method according to any one of claims 1 to 7, wherein the steps (E10, E20) of acquiring the signal and the speed of rotation of the rotor are performed continuously during an operating cycle of the turbojet.

9. A method according to any one of claims 1 to 8, wherein the steps (E10, E20) of acquiring the signal and the speed of rotation of the rotor, and the step (E40) of comparing the amplitude of the signal are performed in real time, while the step (E50) of analyzing the signal is performed in deferred time.

10. A method according to any one of claims 1 to 9, wherein a maintenance message is issued (E70) if it is determined that the phenomenon giving rise to the vibratory event is a mechanical impact against the rotor of the turbojet.

E10 — Acquisition d'un signal vibratoire

Acquisition d'un régime de rotation — E20

E30 — Stockage en continu des données dans une fenêtre glissante

**E40** Amplitude du signal >seuil prédéterminé à ce régime ?

non

oui

E50 — Analyse en temps différé du signal sur la fenêtre temporelle encadrant le franchissement de seuil

**E60** S'agit-il d'un choc mécanique ?

non

oui

E70 — Emission d'un message de maintenance

# FIG.1

**FIG.2**

**FIG.3**

**FIG.4A**

**FIG.4B**

FIG.5A

FIG.5B

**FIG.6A**

**FIG.6B**

FIG.7

FIG.8

EP 2 344 728 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20070250245 A

- US 6907368 B